# FASCICULE DE BREVET EUROPEEN

(11) **EP 0 384 857 B1**
(45) Date de publication et mention de la délivrance du brevet: **01.06.1994**
(21) Numéro de dépôt: 90420080.5
(22) Date de dépôt: 14.02.1990
(51) Int. Cl.: C01B 21/064, C04B 35/58, D01F 9/08, C23C 18/12

(54) **Procédé de préparation de nitrure de bore**
Verfahren zur Herstellung von Bornitrid
Process for the preparation of boron nitride

(30) Priorité: 20.02.1989 FR 8902169
(43) Date de publication de la demande: 29.08.1990
(73) Titulaire: RHONE-POULENC CHIMIE, 92408 Courbevoie Cédex (FR)
(72) Inventeur: Mignani, Gérard, F-69008 Lyon (FR); Ardaud, Pierre, F-69110 Sainte-Foy-les-Lyon (FR); Trichon, Roger, F-69100 Villeurbanne (FR)
(74) Mandataire: Dubruc, Philippe

(56) Documents cités:
- WO-A-88/02003
- GB-A- 2 163 761
- US-A- 4 581 468
- US-A- 4 707 556

## Description

La présente invention a trait à un procédé de préparation de nitrure de bore.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connaît à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives.

Plus récemment, on a découvert qu'il était également possible de préparer du nitrure de bore par pyrolyse de polymères précurseurs.

L'intérêt de la voie polymère réside surtout dans les possibilités de mise en forme de ce type de produit, et plus particulièrement pour l'obtention, après pyrolyse, de fibres ou de films en nitrure de bore.

On a ainsi décrit dans le brevet US 4.581.468 un polymère organoborique qui est obtenu par action de l'ammoniac (ammonolyse) sur un trichloro-trialkylsilyl-borazole (composé cyclique), et qui, indique-t-on, permet d'aboutir, après filage puis pyrolyse à 970°C, à des fibres de nitrure de bore.

Toutefois, le composé cyclique de départ décrit dans ce document est très difficile à préparer, donc coûteux, et, de ce fait, ne peut guère laisser espérer d'application à l'échelle d'une production industrielle.

D'autre part, le rendement pondéral maximal en nitrure de bore susceptible d'être obtenu avec ce type de produit ne dépasse pas 22 %, ce qui signifie, a priori, des rendements réels bien inférieurs à cette valeur.

Enfin, la céramique obtenue après pyrolyse contient, en raison de la nature même du précurseur utilisé, des quantités importantes de silicium.

Il a été également décrit dans la demande de brevet WO 88/02003 un procédé de préparation de composé contenant au moins une liaison bore-azote par réaction d'un premier réactif contenant au moins une liaison N-H et d'un second réactif contenant au moins une liaison B-H en présence d'un catalyseur métallique qui catalyse la réaction de déshydrogénation des liaisons N-H et B-H.

La présente invention a donc pour but de résoudre les problèmes ci-dessus, et de proposer des moyens simples, efficaces, économiques et de mise en oeuvre aisée permettant d'obtenir sous des formes les plus diverses (poudres, fils, fibres, articles moulés, revêtements, pellicules, films, etc...) et avec des rendements pondéraux élevés, des produits céramiques à base de nitrure de bore de haute pureté, notamment exempts de silicium et en outre à très faible teneur en carbone, de teneur inférieure à 0,4 % en poids notamment.

On a maintenant trouvé que ce but, et d'autres, peuvent être atteints au moyen de la présente invention qui concerne en effet un procédé de préparation de nitrure de bore, ledit procédé étant caractérisé par le fait qu'il consiste à pyrolyser sous une atmosphère d'ammoniac le produit de réaction entre (i) au moins un B-trihalogénoborazole de formule : 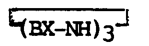
et (ii) au moins une amine primaire de formule :

H₂N-R

formules dans lesquelles X représente un halogène, et R un radical hydrocarboné, éventuellement substitué, contenant inclusivement entre 1 et 6 atomes de carbone.

Outre le fait que les céramiques à base de nitrure de bore ainsi obtenues sont exemptes de silicium, la Demanderesse a pu mettre en évidence que, de façon totalement inattendue et surprenante, le procédé selon l'invention permet également d'aboutir, et ceci avec des rendements pondéraux en céramiques nettement améliorés, à des produits dont la teneur en carbone résiduel est particulièrement faible, l'impureté carbone étant généralement considérée comme préjudiciable pour la qualité des pièces finales en nitrure de bore.

Par ailleurs, et il s'agit là d'un avantage supplémentaire, le fait d'opérer avec des composés de départ qui soient disponibles dans le commerce et/ou aisés à préparer industriellement, et donc peu coûteux, rend le procédé selon l'invention particulièrement économique.

Mais d'autres caractéristiques, aspects et avantages de l'invention apparaîtront encore plus complètement à la lecture de la description qui va suivre, et des exemples concrets, mais non limitatifs, relatifs à sa mise en oeuvre.

Le B-trihalogénoborazole (composé cyclique) de départ préférentiellement utilisé est le B-trichloroborazole, bien que tout autre B-trihalogénoborazole puisse également convenir, comme par exemple un B-trifluoro, un B-tribromo ou un B-triiodoborazole.

Concernant les amines primaires de départ, les radicaux hydrocarbonés R définis ci-avant les plus usités sont les radicaux alkyles, cycloalkyles, aryles, alcényles et alcynyles.

Parmi les radicaux alkyles convenant pour la présente invention, on peut citer les radicaux méthyle, éthyle, propyle, butyle, n-butyle, pentyle et hexyle. Parmi les radicaux cycloalkyles, on peut citer les radicaux cyclopentyle et cyclohexyle. A titre de radicaux aryles : le radical phényle.

A titre de radicaux alcényles, on peut citer plus particulièrement les radicaux vinyle, allyle, butenyle et pentenyle.

Enfin, à titre de radicaux alcynyles, on peut citer plus particulièrement les radicaux éthynyle, propynyle et butynyle.

Selon un mode préférentiel de réalisation de l'invention, on opère avec des amines primaires pour lesquelles les radicaux hydrocarbonés R sont des radicaux saturés, et, plus particulièrement encore, des radicaux du type alkyle.

Selon un autre mode préférentiel de réalisation de l'invention, les radicaux hydrocarbonés R sont des radicaux en C₁-C₄.

Le schéma général des réactions d'aminolyse au sein du milieu réactionnel est le suivant :

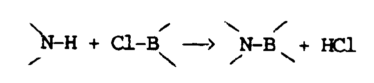

La réaction d'aminolyse peut être opérée en masse, ou, de préférence, en milieu solvant organique (hexane, pentane, toluène ...) et sous conditions anhydres.

On travaille généralement à la pression atmosphérique, bien que des pressions inférieures ou supérieures ne soient bien évidement pas exclues.

La température à laquelle est conduite la réaction n'est pas critique et peut être comprise notamment entre -80°C et la température de reflux du solvant utilisé.

Cependant, les réactions d'aminolyse étant généralement assez exothermiques, on préfère opérer à basses températures, c'est à dire à des températures inférieures à 50°C.

Dans ce dernier cas, il peut être avantageux, pour parfaire la réaction et/ou mieux structurer le polymère formé, soit de laisser mûrir quelques temps le milieu réactionnel en le laissant par exemple revenir progressivement à température ambiante, et de préférence sous agitation mécanique, soit de chauffer le milieu réactionnel, par exemple en le portant à la température de reflux du solvant, et ceci sur une durée pouvant aller de quelques minutes à plusieurs heures.

La durée de la réaction, suivant les quantités de réactif mises en jeu, peut alors varier de quelques minutes à plusieurs heures.

Les rendements de la réaction sont de l'ordre de 80% en poids.

Les quantités de réactifs à mettre en jeu dans le présent procédé doivent correspondre au minimum à la stoechiométrie de la réaction d'aminolyse dont le schéma général a été donné ci-avant, c'est à dire qu'au moins 3 moles d'amine primaire pour 2 moles de B-trihalogénoborazole doivent être utilisées.

Toutefois, compte tenu du fait que la réaction d'aminolyse génère dans le milieu réactionnel des halogénures d'hydrogène (par exemple HCl) et qu'il s'avère souhaitable de neutraliser in situ lesdits halogénures, on préfère selon l'invention utiliser un excès stoechiométrique d'amine primaire, ledit excès correspondant avantageusement à la mise en oeuvre d'au moins 6 moles d'amine primaire pour 2 moles de B-trihalogénoborazole.

Bien entendu, à la place d'un excès stoechiométrique, on peut également procéder de manière équivalente à la neutralisation desdits halogénures d'hydrogène en ajoutant dans le milieu réactionnel une quantité suffisante d'agents neutralisants, du type notamment amine tertiaire et/ou pyridine.

A l'issue de cette étape de réaction, on sépare le polymère du milieu de réaction, notamment du chlorydrate d'amine formé, et ceci par tout moyen connu en soi, par exemple par filtration, ou bien encore par extraction et décantation au moyen notamment d'ammoniac liquide.

Selon un autre mode de réalisation de l'invention, des précurseurs en solution, produits de réactions séparées d'aminolyse avec des amines primaires de départ différentes, sont mélangés dans des proportions de façon à obtenir des propriétés intermédiaires de ces précurseurs. Ce mélange est ensuite soumis aux mêmes étapes qu'un précurseur donné. Lesproportions des précurseurs en solution sont choisies pour arriver à un compromis entre le rendement le plus élevé des rendements de pyrolyse des précurseurs du mélange et la solubilité et la fusibilité les plus grandes de toutes celles des précurseurs de mélange. Les amines primaires de départ utilisées préférentiellement sont la propylamine et la méthylamine, et plus particulièrement avec un rapport en poids des produits de réaction d'aminolyse de la propylamine sur les produits de réaction d'aminolyse de la méthylamine compris entre 0,6 et 1,5.

Le polymère ainsi récupéré, après éventuellement élimination du solvant puis séchage, constitue alors la production.

Si nécessaire, on peut, dans une étape ultérieure, traiter thermiquement le polymère obtenu (thermolyse) dans le but d'améliorer encore sa tenue à la pyrolyse, et donc son rendement pondéral en nitrure de bore. Cette thermolyse, généralement opérée en masse et à une température comprise entre 100°C et 200°C, et de préférence sous ammoniac, a pour effet de modifier la structure interne du polymère, probablement en augmentant son caractère réticulé, ce qui peut expliquer sa tenue thermique améliorée.

Les polymères à base de bore et d'azote obtenus selon l'invention présentent une masse molaire moyenne en nombre (Mn) qui peut être comprise entre 100 et 5000, et plus particulièrement comprise entre 300 et 2000.

Ils présentent d'autre part une masse molaire moyenne en poids (Mw) pouvant s'étaler entre 100 et 5000, et plus particulièrement entre 400 et 2000.

Suivant les conditions de mise en oeuvre du procédé décrit ci-avant (rapports[amine primaire]/[B-trihalogénoborazole], températures de réactions,...), les polymères peuvent se présenter, à température ambiante, sous une forme allant d'une huile très visqueuse, jusqu'à l'état solide.

A l'exception des polymères ayant subi une étape ultérieure de thermolyse, les polymères sont d'autre part fusibles et solubles dans la plupart des solvants organiques usuels (hexane, toluène ...), ce qui peut être très avantageux au niveau de leur possibilité de mise en forme.

Ces polymères à base de bore et d'azote trouvent une application toute particulière dans la fabrication de produits et articles céramiques contenant, au moins en partie, du nitrure de bore.

Selon l'invention, et dans le cas le plus général (obtention de poudres), on pyrolyse alors le polymère dans une atmosphère d'ammoniac, à une température pouvant aller progressivement de 100 à 2 000°C, et ceci jusqu'à ce que le polymère soit converti entièrement en nitrure de bore.

Généralement, la transformation complète en nitrure de bore est obtenue à des températures comprises entre 800 et 1100°C ; toutefois, pour améliorer encore la cristallisation de la céramique, il peut être nécessaire de poursuivre le chauffage à des températures plus élevées, notamment comprises entre 1500 et 2000°C.

Le polymère, avant pyrolyse, peut également être mis en forme, par filmage, par moulage ou par filage par exemple. Dans le cas où l'on désire obtenir des fibres, le polymère est filé au moyen d'une filière classique (après fusion éventuelle si le polymère est initialement à l'état solide), puis est traité thermiquement sous atmosphère d'ammoniac à une température allant de 100 à 2000°C, pour donner une fibre en nitrure de bore.

Si nécessaire, on peut, avant ledit traitement thermique, soumettre la fibre à un traitement destiné à améliorer sa tenue thermique et/ou mécanique, notamment un traitement sous HCl.

Les fibres obtenues peuvent alors servir de structure de renforcement pour des matériaux composites du type céramique/céramique, céramique/métal, ou céramique/plastique.

Des exemples illustrants l'invention vont maintenant être donnés.

### Exemple 1

Dans un ballon de 1 litre séché sous azote on charge 43,7 grammes (0,43 mole) de Triéthylamine (TEA), 15 grammes de mono-n-butylamine (O,205 mole) et 300 ml de Toluène (solvant).

Dans un deuxième ballon, on dissout 17,1 grammes de 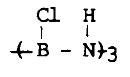
(0,093 mole) dans 400 ml de toluène. Cette solution est coulée en 1h30 sur le première à température ambiante ; la température du milieu réactionnel passe alors de 25 à 35°C.

Le mélange est laissé sous agitation pendant 4 heures à 20°C puis le précipité de chlorhydrate de TEA est filtré sous azote.

Après évaporation du solvant on isole 14 grammes d'une huile visqueuse jaune.

Les caractéristiques du polymère obtenu sont les suivantes :
- teneur résiduelle en chlore : 0,98 % en poids
- TGA (sous hélium à 850°C) : 38,9 %.

Ce polymère est ensuite pyrolysé à 1000°C sous ammoniac pour conduire à une céramique, que les analyses IR et RAMAN permettent d'identifier comme étant du nitrure de bore. Le rendement de la pyrolyse est alors de 36,3 % en poids.

Les analyses élémentaires donnent pour ladite céramique la composition suivante (les % sont donnés en poids) :
B = 40,8 %
N = 57,8 %
C < 0,1 %
H = 0,5 %
O = 1,1 %

### EXEMPLE 2

Dans un ballon de 250 ml séché sous azote, on prépare une solution de 10,7 g de (B(Cl)-N(H))₃ (0,058 mol) dans 200 ml de toluène.

Dans un réacteur de 500 ml séché sous azote, on charge 18 g de monométhylamine (0,58 mol) à -10°C et 250 ml de toluène.

La première solution est coulée sur la deuxième à une température variant entre -10 et 30°C pendant une durée de 45 minutes, puis le mélange est laissé sous agitation pendant une durée de 16 heures.

Après filtration et évaporation on récupère 5 g d'un polymère solide blanc légèrement collant.

Les caractéristiques du polymère obtenu sont les suivantes :
température de ramollissement : 50°C
Mn = 310
Mw = 450 TGA (sous Hélium à 850°) = 53,0 %
Ip = 1,44
taux de chlore résiduel = 0,2 % en poids.

Ce polymère est ensuite pyrolysé à 1000°C sous ammoniac pour conduire à une céramique que les analyses IR et RAMAN permettent d'identifier comme étant du nitrure de bore.
Rendement de pyrolyse à 1000°C : 46,7 % en poids
Taux de carbone dans la céramique : 0,18 % en poids.

### EXEMPLE 3

Dans un réacteur tricol de 3 litres séché sous azote, on charge 55 grammes de Btrichloroborazole (0,3 moles) et 1900 ml de toluène.

On coule ensuite 141 g de propylamine (2,3 moles) en 1 heure alors que la température évolue de 23 à 45°C.

Le milieu réactionnel est ensuite chauffé au reflux pendant 3 heures puis filtré sous azote.

Un échantillon de la solution est évaporé pour connaitre le titre de la solution et les caractéristiques du précurseur.

Le restant de la solution est appelé solution A.

Le rendement de la réaction est de 75,6 % en poids. Ce produit est soluble dans le toluène, il est gommeux et stable à température ambiante.

Il possède un point de fusion de 45°C.

Le rendement de la pyrolyse sous ammoniac à 1000°C est de 33,6 % en poids.

### EXEMPLE 4

Dans un réacteur de 3 litres séché sous azote, on charge 57,2 g de Btrichloroborazole (0,31 moles) et 2100 ml de toluène.

On additionne en 1 h 30, 77 g de méthylamine (2,48 moles) alors que la température du milieu réactionnel passe de 25 à 50°C.

Le milieu réactionnel est ensuite chauffé au reflux pendant 3 heures puis filtré sous azote.

Un échantillon de la solution est évaporé pour connaitre le titre de la solution et les caractéristiques du précurseur.

Le restant de la solution est appelé solution B.

Le rendement de la réaction est de 64,3 % en poids.

Ce produit est peu soluble dans le toluène et peu stable thermiquement (réticule par chauffage). A température ambiante, ce produit est solide.

Le rendement de la pyrolyse sous ammoniac à 1000°C est de 48,1 % en poids.

### EXEMPLE 5

Les deux solutions A et B obtenues précédemment sont mélangées dans des proportions données (calculées sur l'extrait sec) puis évaporées afin de connaitre l'influence réciproque des 2 précurseurs sur les caractéristiques du mélange.
a) rapport A/B = 51,3/48,7 en poids.
   Le précurseur ainsi obtenu est un solide transparent à température ambiante et est liquide à 100°C, son point de fusion est de 70°C. Il est partiellement soluble dans le toluène.
   Le rendement de la pyrolyse sous ammoniac de ce mélange de précurseurs jusqu'à 1000°C est de 39,67 % en poids.
b) rapport A/B = 74,4/24,6 en poids.
   Le précurseur ainsi obtenu est un solide transparent à température ambiante et est liquide à 100°C, son point de fusion est de 50°C. Il est soluble dans le toluène.
   Le rendement de la pyrolyse sous ammoniac de ce mélange de précurseurs jusqu'à 1000°C est de 35,2 % en poids.

### EXEMPLE COMPARATIF 6

La synthèse est décrite dans l'exemple 2 où les réactifs de départ sont la méthylamine et (B(Cl)-N(H))₃. Le précurseur obtenu est ensuite soumis à deux traitements différents :
- pyrolyse sous ammoniac :
   le précurseur est chauffé de 30°C jusqu'à 200°C sous ammoniac pour augmenter son caractère réticulé, puis après 4 heures, chauffé de 200°C à 1000°C sous ammoniac.
   Le rendement de la pyrolyse est de 48,9 % en poids. Les analyses IR et RAMAN permettant d'identifier la céramique comme étant du nitrure de bore.
   Les analyses élémentaires donnent pour ladite céramique la composition suivante (les % sont donnés en poids) :
   B = 40,9 %
   N = 55,5 %
   C = 0,3 %
   H = 0,5 %
   O = 1,2 %
- pyrolyse sous azote :
   même procédé de pyrolyse que la pyrolyse sous ammoniac, l'ammoniac étant remplacé par l'azote.
   Le rendement de la pyrolyse est de 46,1 % en poids. Les analyses élémentaires donnent pour ladite céramique la composition suivante (les % sont donnés en poids) :
   B = 40,1 %
   N = 55,1 %
   C = 2,1 %
   H = 0,2 %
   O = 1,6 %

## Revendications

1. Procédé de préparation de nitrure de bore, caractérisé par le fait qu'il consiste à pyrolyser sous une atmosphère d'ammoniac le produit de réaction entre (i) au moins un B-trihalogénoborazole de formule : 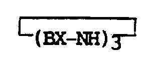 et (ii) au moins une amine primaire de formule :
H₂N-R
formules dans lesquelles X représente un halogène, et R un radical hydrocarboné, éventuellement substitué, contenant inclusivement entre 1 et 6 atomes de carbone.

2. Procédé selon la revendication 1, caractérisé en ce que ledit radical R est un radical hydrocarboné saturé.

3. Procédé selon l'une quelconque des revendications précédentes, caractérisé en ce que ledit radical R est un radical hydrocarboné en C₁-C₄.

4. Procédé selon l'une quelconque des revendications précédentes, caractérisé en ce que ledit radical R est un radical alkyle.

5. Procédé selon l'une quelconque des revendications précédentes, caractérisé en ce que X est le chlore.

6. Procédé selon l'une quelconque des revendications précédentes, caractérisé en ce que ladite réaction a été réalisée en milieu solvant organique.

7. Procédé selon l'une quelconque des revendications précédentes, caractérisé en ce que la réaction a été réalisée en présence d'un excès stoechiométrique d'amine primaire.

8. Procédé selon l'une quelconque des revendications précédentes, caractérisé en ce que des précurseurs en solution, produits de réactions séparées d'aminolyse, sont mélangés.

9. Procédé selon la revendication 8, caractérisé en ce que les précurseurs en solution mélangés sont les produits de l'aminolyse de la propylamine et de l'aminolyse de la méthylamine.

10. Procédé selon la revendication 9, caractérisé en ce que le rapport en poids des produits de réaction d'aminolyse de la propylamine sur les produits de réaction d'aminolyse de la méthylamine est compris entre 0,6 et 1,5.

11. Procédé selon l'une quelconque des revendications précédentes, caractérisé en ce que, préalablement à ladite pyrolyse, ledit produit de réaction a été mis à une forme d'article désirée, notamment une fibre ou un film de revêtement.

## Claims

1. Process for the preparation of boron nitride, characterized in that it consists in pyrolysing under an ammonia atmosphere the product of reaction between (i) at least one B-trihaloborazole of formula: 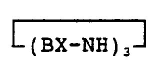 and (ii) at least one primary amine of formula:
H₂N-R
in which formulae X denotes a halogen and R an optionally substituted hydrocarbon radical containing between 1 and 6 carbon atoms inclusive.

2. Process according to Claim 1, characterized in that the said radical R is a saturated hydrocarbon radical.

3. Process according to either of the preceding claims, characterized in that the said radical R is a C₁-C₄ hydrocarbon radical.

4. Process according to any one of the preceding claims, characterized in that the said radical R is an alkyl radical.

5. Process according to any one of the preceding claims, characterized in that X is chlorine.

6. Process according to any one of the preceding claims, characterized in that the said reaction has been performed in an organic solvent medium.

7. Process according to any one of the preceding claims, characterized in that the reaction has been carried out in the presence of a stoichiometric excess of primary amine.

8. Process according to any one of the preceding claims, characterized in that the precursors in solution, which have been produced by separate aminolysis reactions, are mixed.

9. Process according to Claim 8, characterized in that the mixed precursors in solution are the products of the aminolysis of propylamine and of the aminolysis of methylamine.

10. Process according to Claim 9, characterized in that the weight ratio of the products of aminolysis reaction of propylamine to the products of aminolysis reaction of methylamine is between 0.6 and 1.5.

11. Process according to any one of the preceding claims, characterized in that, before the said pyrolysis, the said reaction product has been put in a desired article form, especially a fibre or a coating film.

## Patentansprüche

1. Verfahren zur Herstellung von Bornitrid, dadurch gekennzeichnet, daß man das Reaktionsprodukt aus (i) mindestens einem B-Trihalogenborazol der Formel: 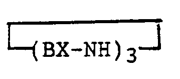 und (ii) mindestens einem primären Amin der Formel:
H₂N-R,
wobei in den Formeln X für ein Halogen steht und R einen gegebenenfalls substituierten Kohlenwasserstoffrest mit 1 bis 6 Kohlenstoffatomen bedeutet, in einer Ammoniakatmosphäre thermisch zersetzt.

2. Verfahren nach Anspruch 1, dadurch gekennzeichnet, daß der Rest R ein gesättigter Kohlenwasserstoffrest ist.

3. Verfahren nach einem der vorangehenden Ansprüche, dadurch gekennzeichnet, daß der Rest R ein C₁-C₄-Kohlenwasserstoffrest ist.

4. Verfahren nach einem der vorangehenden Ansprüche, dadurch gekennzeichnet, daß der Rest R ein Alkylrest ist.

5. Verfahren nach einem der vorangehenden Ansprüche, dadurch gekennzeichnet, daß X Chlor bedeutet.

6. Verfahren nach einem der vorangehenden Ansprüche, dadurch gekennzeichnet, daß man die Reaktion in einem organischen Lösungsmittelmedium durchführt.

7. Verfahren nach einem der vorangehenden Ansprüche, dadurch gekennzeichnet, daß man die Reaktion in Gegenwart eines stöchiometrischen Überschusses des primären Amins durchführt.

8. Verfahren nach einem der vorangehenden Ansprüche, dadurch gekennzeichnet, daß man gelöste Vorläufer, Produkte getrennter Aminolysereaktionen, miteinander vermischt.

9. Verfahren nach Anspruch 8, dadurch gekennzeichnet, daß die vermischten gelösten Vorläufer die Produkte der Aminolyse mit Propylamin und der Aminolyse mit Methylamin sind.

10. Verfahren nach Anspruch 9, dadurch gekennzeichnet, daß das Gewichtsverhältnis der Reaktionsprodukte der Aminolyse mit Propylamin zu den Reaktionsprodukten der Aminolyse mit Methylamin im Bereich von 0,6 bis 1,5 liegt.

11. Verfahren nach einem der vorangehenden Ansprüche, dadurch gekennzeichnet, daß das genannte Reaktionsprodukt vor der thermischen Zersetzung in die Form eines gewünschten Erzeugnisses, vor allem einer Faser oder einer Überzugsfolie, gebracht worden ist.
